# EUROPEAN PATENT APPLICATION

(11) **EP 4 118 970 A1**
(43) Date of publication of application: **18.01.2023**
(21) Application number: 21185904.6
(22) Date of filing: 15.07.2021
(51) Int. Cl.: A22C 11/00, A22C 11/12

(54) **SYSTEM FOR MANUFACTURING SAUSAGE-SHAPED PRODUCTS USING GUIDING MEANS**

(71) Applicant: Poly-clip System GmbH & Co. KG, 65795 Hattersheim (DE)
(72) Inventor: Melchert, Uwe, 60385 Frankfurt am Main (DE)
(74) Representative: Eisenführ Speiser

(57) **Abstract**

A system (100) for manufacturing sausage-shaped products, the system (100) comprising a clipping machine (200) with a clipping unit (210) for applying and closing at least one closure means on a plait-like portion between two successive sausage-shaped products of a chain of sausage-shaped products wherein the plait-like portion defines a closure axis (A) at least during the application and closure of the closure means. The system further comprises first guiding means (300) positioned at least close to the clipping unit (210) and extending at least upstream of the clipping unit (210), and second guiding means (400) arranged spaced apart to and upstream of the clipping unit (210), the second guiding means (400) having a second guiding surface (412a, 414a) for guiding a sausage-shaped product to be guided to the clipping unit (210) wherein the second guiding surface (412a, 414a) are oriented at least substantially perpendicular to the first guiding surface (310a) of the first guiding means (300). The second guiding surface (412a, 414a) of the second guiding means (400) are provided at a location on the first guiding means (300) that is offset from the closure axis (A) of the clipping unit (210).

## Description

### FIELD OF THE INVENTION

The present invention relates to a system, comprising a clipping machine, a first guiding means and a second guiding means for guiding sausage-shaped products to the clipping machine. Furthermore, the present invention relates to the second guiding means for usage with this system.

### BACKGROUND OF THE INVENTION

In the field of manufacturing sausage-shaped products, it is known in practice to fill a tubular casing, which is closed at its front end by a closure means such as a closure clip, with filling material. The filling material can be a food product, such as sausage meat, but also a chemical product, such as an adhesive or a sealant. After a certain length of the tubular casing has been filled, the filled section of the casing can be rotated around its own central axis so that a plait-like portion, which is at least substantially free of filling material, is formed at the transition of the filled tubular casing section to an unfilled or partially filled tubular casing section, whereby a sausage-shaped product is created. This step is repeated several times with successive filled sections and creates a chain consisting of a plurality of sausage-shaped products separated from each other by plait-like portions.

In the production step following this filling step, at least one closure means can be applied at the plait-like portion and can be closed by a clipping unit of a clipping machine. The clipping machine can be a manually operated clipping machine or a semi-automatic clipping machine. In the former case, each step necessary to apply and close a closure means on the plait-like portion is to be performed by an operator. In the latter case, the sausage-shaped products are fed to the clipping machine by an operator, and the clipping operation as such, i.e. the application and closing of a closure means on the plait-like portion, is then performed by the clipping machine, in particular by a punch of the clipping unit driven by a motorized drive, for example a pneumatic drive, which is triggered by the operator.

In each case, the operator must pull the chain of sausage-shaped products to and away from the clipping machine. However, pulling by the operator can cause the chain of sausage-shaped products to be tangled up and move uncontrollably in unintended areas of the working space around the clipping machine. The chain can also lose its alignment and be differently oriented than is necessary for the following working steps. This disrupts the workflow and creates additional challenges for the operator of the clipping machine. Therefore, there is need for a solution to help in simplifying the workflow.

### SUMMARY OF THE INVENTION

The following description contains specific information pertaining to implementations in the present disclosure. The present application discloses a system for manufacturing sausage-shaped products, comprising, inter alia, first and second guiding means for guiding a chain of sausage-shaped products and a clipping machine as defined in independent claim 1 as well as by a guiding means for use with this system as defined in independent claim 15. Further developments of the present invention are defined in the dependent claims.

According to a first aspect, the system for manufacturing sausage-shaped products comprises: a clipping machine with a clipping unit for applying and closing at least one closure means on a plait-like portion between two successive sausage-shaped products of a chain of sausage-shaped products wherein the plait-like portion defines a closure axis at least during the application and closure of the closure means, first guiding means having a first guiding surface positioned at least close to the clipping unit and extending at least upstream of the clipping unit, and second guiding means arranged spaced apart to and upstream of the clipping unit, the second guiding means having a second guiding surface for guiding a sausage-shaped product to be guided or directed to the clipping unit wherein the second guiding surface is oriented at least substantially perpendicular to the first guiding surface of the first guiding means, wherein the second guiding surface of the second guiding means are provided at a location on the first guiding surface of the first guiding means that is offset from the closure axis of the clipping unit. By doing this, the second guiding surface and its relative positioning displaced from the closure axis ensures that the chain of sausage-shaped products can be fed to the clipping unit of the clipping machine without any interference. Disturbances that can occur, for example, if the individual sausages in the chain of sausage-shaped products lie on top of each other or are entangled, are avoided. Moreover, the chain of sausage-shaped products is aligned by the strain applied at least via the surface of the second guiding means. Guiding the chain of sausage-shaped products around the second guiding means and its second guiding surface results in a stretching effect on the chain and consequently aligns the elements of the chain in pulling direction. Therefore, the manufacturing workflow is simplified since the operator does not have to worry about unaligned chains of sausage-shaped products coming from the upstream side.

In some embodiments, the first guiding surface provided by the first guiding means is several times larger than the second guiding surface provided by the second guiding means. This ensures the containment of large chains of sausage-shaped products. For example, the first guiding surface of the first guiding means may be formed by a flat surface, such as a working surface with a large surface area, whereas the second guiding surface of the second guiding means is provided by a single guiding element having a small surface area compared to the surface area of the first guiding surface provided by the first guiding means. The second guiding means can be formed, e.g. by a guide cylinder, whose diameter and height are much smaller relative to the dimensions of the first guiding surface formed by the first guiding means. As a result, the chain of sausage-shaped products is guided by the first guiding means over a longer period of time during their movement from a filling and/or twisting station to the clipping machine and afterwards, whereas the second guiding means only come into contact with a single or few sausage-shaped products of the chain of sausage-shaped products for a short time in comparison. This makes it possible to provide the sausage-shaped products, in particular the chain of sausage-shaped products, with a guiding by means of the first guiding means, which prevents the sausage-shaped products from falling to the ground, for example, and to impress a guiding or steering impulse by means of the second guiding means of the chain of sausage-shaped products in order to align and, if necessary, disentangle or the like the chain of sausage-shaped products.

The first and/or the second guiding means may be made of a food harmless material. If they are made of stainless steel, they facilitate cleaning of the system.

In some embodiments, the first guiding surface of the first guiding means is a table top providing an at least substantially flat surface extending preferably horizontally. By doing this, the chain of sausage-shaped products is contained in a plane at a certain height and is not sliding off due to, for example, an askew surface. Furthermore, the sausage-shaped products of the chain are prevented from falling to the ground and sufficient space is created for the operator to feed in quick succession the filling-free, plait-like portion between two successive sausage-shaped products to the clipping machine. Furthermore, it ensures that no sausage-shaped with askew shoulders are produced, since the chain of sausage-shaped products is not pulled by gravity, therefore deforming the sausage-shaped products.

In some embodiments, the first guiding surface of the first guiding means surrounds at least substantially completely the clipping unit. This ensures that the chain of sausage-shaped products is contained in the same plane before and after the clipping process and does not fall to the ground.

In some embodiments, the second guiding surface of the second guiding means is continuously rounded and extends preferably at least substantially perpendicular to the first guiding surface of the first guiding means. By doing this, the rounded surface and the angle ensure smooth guiding of the chain of sausage-shaped products. The guiding surface can be part of a guide element that can have any shape apart from the guiding surface. A continuously rounded guiding surface can also be achieved by a corresponding polygonal design of the guiding surface.

In some embodiments, the second guiding means comprise a first guide cylinder provided at least partially with the second guiding surface. By doing this, the chain of sausage-shaped products is guided along the guide cylinder in a way such that the guide cylinder exerts strain on the chain. This helps in aligning the chain. In addition, the cylinder shape represents an easy-to-manufacture component for the second guiding means.

In some embodiments, the second guiding means comprise a second guide cylinder, which extends at least substantially parallel to the first guide cylinder, which is provided at least partially with a further second guiding surface. This creates a gateway for guiding the chain of sausage-shaped products to be fed through and improves the guiding even further. However, the second guiding means do not need to comprise a second cylinder. It is sufficient that the chain of sausage-shaped products is guided on the surface of the second guiding means that is facing away from the closure axis, i.e. the guiding surface of the first guide cylinder. Therefore, for the realization of the invention, a single guide cylinder is sufficient. However, an additional guide cylinder or a similar element can be helpful when guiding a chain with large sausage-shaped products, e.g. when the sausage-shaped products are much larger than the dimensions of the first guide cylinder, or when the chain of sausage-shaped products is pulled more rapidly due to a faster workflow. In particular, the second guide cylinder can limit and partially redirect the impulse imposed on the chain of sausage-shaped products by the first guide cylinder of the second guiding means.

In some embodiments, the first and the second guide cylinder define an at least substantially vertically extending plane, which preferably intersects the closure axis at an obtuse angle. By doing this, the chain of sausage-shaped products exits the plane defined by the first and second guide cylinders in an orientation such that a central axis defined by the chain of sausage-shaped products is almost perpendicular to the plane and therefore the chain is in a preferred alignment for the clipping process, since the central axis of the chain of sausage-shaped products is almost parallel to the closure axis. In particular, this allows the operator to easily grasp a sausage-shaped product, since the operator is positioned in front of the clipping machine, facing the clipping machine and therefore the thumb of the operators right hand points in downstream direction is substantially parallel to the central axis of the sausage-shaped product, that is leaving the substantially vertically extending plane defined by the first and second guide cylinders. Due to this alignment, it is possible for the operator to ergonomically grab the sausage-shaped product with his right hand.

In some embodiments, the first and/or the second guide cylinder are detachably attached at the first guiding means and are adjustable along the first guiding surface provided by the first guiding means. By doing this, the guide cylinders can be moved relative to the first guiding surface of the first guiding means and therefore relative to each other, for example, to replace one or both guide cylinders with differently designed guide cylinders and/or to facilitate cleaning of the system. However, it is also possible that one cylinder is fixed while the other can be moved.

In some embodiments, the first and the second guide cylinders are connected to each other on their free ends, preferably via an arc. The arc further limits the guiding directions, in particular in the upward direction, and can also be used as a handle for easy movement of the first and second guide cylinder.

In some embodiments, the system further comprises a manual trigger button for triggering the clipping procedure of the clipping machine. The button is preferably placed such that the operator can easily access and trigger the clipping process, for example, with the heel of one of his hands.

In some embodiments, the system further comprises third guiding means having a third guiding surface and being detachably attached at the first guiding means and extending at least substantially perpendicular to the first guiding means. By doing this, the third guiding means are oriented such that the chain of sausage-shaped products cannot fall off the first guiding means.

In some embodiments, the third guiding means are formed by a material strip, preferably made of stainless steel. Therefore, the third guiding means act as a guiding barrier that can also be easily cleaned.

In some embodiments, the guiding surfaces of the first and/or the second guide cylinders are made from a material having a low friction coefficient. Therefore, the chain of sausage-shaped products is guided by the guiding surface of the guide cylinder but not significantly slowed down by the guiding surface.

According to another aspect of the invention, a second guiding means for use with a system as described in the present disclosure is formed by a guide cylinder detachably attachable to the first guiding means of the system in a position upstream and spaced apart from the clipping unit. This aspect relates to the subject-matter of the second guiding means of the invention that is beneficial to better guiding and aligning of the chain of sausage-shaped products.

Further advantages and preferred embodiments of the present invention will be described in the following together with the drawings listed below. The expressions "left", "right" and "above" used in the following description are referred to the drawings in an alignment such that the reference numbers and the notation of the Figs. used can be read in normal orientation. Finally, using the correct orientation of the Figs., downstream refers to devices being located further on the left and upstream refers to devices being located further on the right in the Figs.

### BRIEF DESCRIPTION OF THE FIGURES

- Fig. 1: is an isometric view of a system for manufacturing sausage-shaped products, consisting of a clipping machine and two guiding means according to an embodiment of the present invention.
- Fig. 2: is an isometric view of a second guiding means for guiding sausage-shaped products.
- Fig. 3: is a top view of Fig. 1.

### DETAILED DESCRIPTION OF THE FIGURES

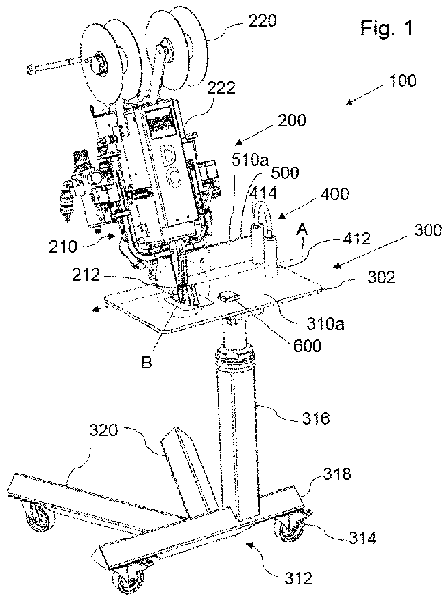

Fig. 1 depicts an isometric side view of a system 100 for manufacturing sausage-shaped products, like sausages, according to the invention. In the illustrated embodiment, system 100 comprises as main components a clipping machine 200, first guiding means 300, second guiding means 400 and optionally third guiding means 500.

Clipping machine 200 comprises at least one clipping unit 210 for applying and closing of at least one closure means, such as closure clips, to and on a plait-like portion extending between two successive sausage-shaped products (not shown) and being at least substantially free of the filling material of the sausage-shaped products. The two successive sausage-shaped products form already a short chain, but may also be part of a chain of sausage-shaped products comprising a plurality of such products connected to each other via the plait-like portions to form the chain.

Clipping unit 210 comprises closure tools (not shown) for applying and closing the at least one closure means to and on the plait-like portion. The closure tools consist of at least one punch and one die, wherein the punch can be moved towards to and away from the die in a vertical plane extending perpendicular to a closure axis A defined by the plait-like portion extending between the two successive sausage-shaped products during application and closure of the at least one closure means. Further, clipping unit 210 has a slot-shaped receptacle 212 and a clip guide (not shown) open at the top into which the plait-like portion can be inserted during application and closure of the at least one closure means to the plait-like portion by an operator. Receptacle 212 is formed by, for example, two plate-like receptacle elements each having a slit open to the top and being arranged with a small distance between each other so that the plait-like portion between two successive sausage-shaped products can be inserted into the slits of both receptacle elements by the operator and form then at least substantially a straight line defining closure axis A. Receptacle 212, clip guide, together with the closure tools close before and in their closing position, define a closure area B shown with a dashed circle in Fig. 1.

Two clip supply reels 220 are arranged above clipping unit 210, from which closure means can be fed close to closure area B via two clip guides 222. Two clip supply reels 220 instead of one clip supply reel 220 further speed up the workflow due to longer periods of clipping sausage-shaped products without having to replace a in the process emptied clip supply reel. A respective clip guide 222 is assigned to one clip supply reel 220 so that closure means, which can be S-clip, can be fed to closure area B of clipping unit 210 along one clip guide 222 from one clip supply reel 220. From clip guide 222, the punch can receive or pick-up one closure means and can move this closure means to the plait-like portion for applying and closing it there using the closure tools.

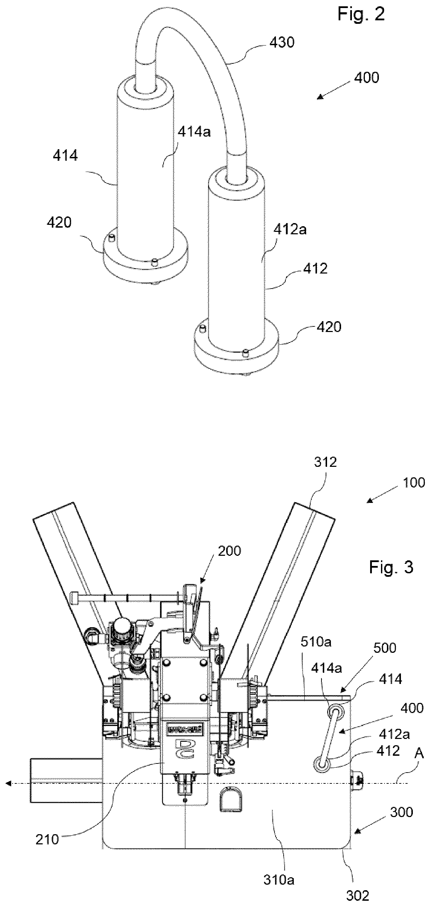

First guiding means 300 are at least located upstream of clipping machine 200 or clipping unit 210, and serve to guide at least a pair, preferably a chain of a plurality of sausage-shaped products in a plane extending at least approximately horizontally and parallel to closure axis A. In the shown embodiment, first guiding means 300 are formed by a table top 302 made of stainless steel with a table surface 310a and carried by a mobile support frame 312 described in more detail below. As can be seen in Figs. 1 and 3, table top 302 has at least substantially a rectangular shape in plan or top view with the two shorter sides of the rectangle extending perpendicular to closure axis A. Table top 302 extends both downstream of and on either side of clipping unit 210 so that clipping unit 210 is completely surrounded by first guiding means 300. Table surface 310a is used for securing chains of sausage-shaped products and/or sausage-shaped products against falling down to the ground. First guiding means 300 therefore keeps the sausage-shaped products in a plane at a certain height from the ground such that the sausage-shaped products can be easily grabbed by the operator for further production steps such as clipping.

As can be seen from Figs. 1 and 3, behind clipping unit 210 and second guiding means 400, with respect to the extension of closure axis A shown in Figs. 1 and 3, third guiding means 500 extend approximately to clipping machine 200 or clipping unit 210. Third guiding means 500 are formed by a stainless steel guide strip extending from the right end of first guiding means 300 and having a third guiding surface 510a. Third guiding means 500 extend substantially vertically above first guiding means 300 and are detachably attached thereto. It serves to prevent the sausage-shaped products guided by first and second guiding means 300, 400 from falling down at the rear end of first guiding means 300, with respect to the extension of closure axis A.

Moreover depicted are second guiding means 400 with first and second guide cylinders 412, 414. In the isometric view of Fig. 1, second guiding means 400 are located upstream of closure area B. Second guiding means 400, which are shown in an isometric close-up view in Fig. 2, are provided upstream of clipping unit 210, referred to a feeding direction extending in Figs. 1 and 3 from right to left, and are formed by two guide cylinders 412, 414 arranged above and extending at least approximately perpendicular to first guiding means 300. Each cylinder of both guide cylinders 412, 414 comprises a respective guiding surface 412a, 414a. Both guide cylinders 412, 414 extend at least substantially parallel to each other, are detachably attached to first guiding means 300 and are spaced apart from each other to form a gate, defining a vertical plane extending substantially perpendicular to the horizontal plane defined by first guiding means 300. As can be seen in particular from Fig. 3, both guide cylinders 412, 414 are arranged at a distance from the extension of closure axis A depicted in Fig. 3, the vertical plane spanned by them extending at an obtuse angle with respect to the extension of closure axis A.

Furthermore, second guiding means 400 or both guide cylinders 412, 414 are arranged at such a distance from closure area B of clipping unit 210 that an operator can easily grasp the sausage-shaped products downstream of second guiding means 400. If sausage-shaped products of different lengths are to be processed with system 100 according to the invention, the position of second guiding means 400, with respect to closure area B, can be changed or adjusted both in a direction at least approximately parallel to closure axis A and in a direction at least approximately perpendicular thereto, as has already been mentioned before.

Both guide cylinders 412, 414 and their respective guiding surfaces 412a, 414a are made of a material that has a low friction coefficient, for example, stainless-steel or a synthetic material, and that is appropriately selected for the respective application of system 100. For example, in case of the processing of foodstuffs, like sausages, guide cylinders 412, 414 are made of a synthetic material compatible with foodstuffs or approved for use with foodstuffs.

Guide cylinders 412, 414 are each provided at their lower end with a respective circular base or socket 420 via which they can be detachably connected to first guiding means 300 by three screw/nut connections in each case. Furthermore, both guide cylinders 412, 414 are connected to each other via an arc 430 preferably also made of a synthetic material. Arc 430 opens in the direction perpendicular to first guiding means 300 and serves to limit the guiding through second guiding means 400 in the vertical direction.

As can further be seen from Figs. 1 and 3, both guide cylinders 412, 414 have a relatively small diameter in the range of 10 mm through 200 mm, preferably in the range of 20 mm to 80 mm, and more preferably in the range of 30 mm through 50 mm wherein the height of the guide cylinders can be in the range of 50 mm through 200 mm, preferably in the range of 90 mm to 170 mm, and more preferably in the range of 130 mm through 150 mm. Therefore, with their outer circumferential surfaces 412a, 414a they provide a guiding surface that is many times smaller than the first guiding surface 310a formed, for example, by the upper surface of table top 302 of first guiding means 300 which can have an area in the range of 30.000 mm² through 2.500.000 mm², preferably in the range of 50.000 mm² to 700.000 mm², and more preferably in the range of 100.000 mm² through 300.000 mm². As a result, the chain of sausage-shaped products is guided by guiding surfaces 412a, 414a of guide cylinders 412, 414 for only a short time during their movement along guiding surfaces 412a, 414a in comparison with the time they are guided by first guiding surface 310a, but the drum-shaped design of guide cylinders 412, 414, in particular guiding surfaces 412a, 414a provided by them, provides the chain of sausage-shaped products with an impulse oriented radially and pointing away from the axial centres of guide cylinders 412, 414 for disentangling and aligning the chain of sausage-shaped products.

System 100 also comprises a manual trigger button 600 for triggering clipping unit 210 of clipping machine 200. Generally, manual trigger button 600 is a button to be pressed by an operator operating system 100 and is preferably electrically or pneumatically connected to clipping machine 200 via connection means (not shown). Pressing of manual trigger button 600 triggers clipping unit 210 of clipping machine 200 and applies the at least one closure means to the plait-like portion between two successive sausage-shaped products by the die and the punch of clipping unit 210 wherein the punch can be driven by a pneumatic source. Manual trigger button 600 is arranged on first guiding surface 310a at a location where the operator can easily trigger manual trigger button 600 with the heel of the right hand. Preferably, the button is located such that the operator can grab the next sausage-shaped product in the chain of sausage-shaped products having passed second guiding means 400.

Mobile support frame 312 as depicted in Figs. 1 and 3 comprises one leg or post 316, which is oriented vertically to table top 302 and comprises an upper portion attached to table top 302 and a lower portion attached to one bar or leg 318 that extends in downstream direction. Bar 318 is fixedly attached to two support bars or legs 320 extending horizontally away from bar 318 in direction of clipping machine 200. This stabilizes system 100 against falling over due to the displaced centre of gravity of clipping machine 200. Support bars 320 comprise lockable wheels 314 for easy movement. However, first guiding means 300 can also comprise legs without wheels or no legs at all. The whole system can be placed fixedly attached onto a surface, therefore not needing mobile support frame 312.

In operation, before the clipping step, the chain of sausage-shaped products is a long empty tubular casing, which is made of a relatively thin foil and which is to be filled with filling material, like sausage meat, an adhesive or a sealing material. After closing an end of the tubular casing by a closure means, this end is considered the downstream end of the tubular casing. The yet empty tubular casing is filled from the other open end, i.e. the upstream end, with the filling material. When a certain amount of filling material has been filled into the tubular casing, the filled section is rotated around its own central axis while holding the downstream end of the tubular casing and the upstream of the filled section located empty section of the tubular casing, creating a sausage-shaped product. This creates a plait-like portion at the upstream side of the sausage-shaped product, wherein the plait-like portion is substantially free of filling material. Subsequently, the immediately following unfilled part of the tubular casing can be filled with filling material and is rotated around its own central axis. After repeating this process several times, a chain consisting of sausage-shaped products and plait-like portions is created. In a next step, the closure means are applied to the plait-like portions.

For applying and closing the closure means, second guiding means 400 align at least two successive sausage-shaped products, in particular the chain of a plurality of successive sausage-shaped products, in such a way that one product follows the other along a continuous line, i.e. a line that does not have, for example, curls, circles and/or is not ravelled so that the products do not lie on top of each other, for instance. This allows the operator to easily grasp one sausage-shaped product of the chain of products without having to pay attention to whether the products located in the feeding direction downstream of second guiding means 400 are on top of each other or intertwined with each other. At the same time, second guiding means 400 guide and position the successive sausage-shaped products in such a way that they can be easily grasped by the operator downstream of second guiding means 400 as described earlier.

Referred to the arrangement of system 100 shown in Figs. 1 and 3, the operator can grasp with his right hand one sausage-shaped product of the chain of sausage-shaped products downstream of second guiding means 400, and at the same time grasp with his left hand the leading sausage-shaped product, with respect to the feeding direction, of two sausage-shaped products between which at least one closure means has just been placed and closed, and continue to pull the chain of sausage-shaped products to the left, i.e. in feeding or downstream direction, so that the plait-like portion of the two sausage-shaped products which follow the sausage-shaped product that the operator has gripped with his left hand, and of which the rear sausage-shaped product has been grasped by the operator with his right hand, can be brought into closure area B for setting and closing of a further closure means. Simultaneously or shortly afterwards, the operator can push manual trigger button 600 with his right hand, preferably with the heel of his right hand, in order to trigger the applying and closing operation of clipping unit 210.

The steps explained above comprise the production of chains of sausage-shaped products. It is to be noted, that this system is also capable of manufacturing ring-sausage-shaped products. Crucial for ring-sausage-shaped products is a sufficiently long sausage in the chain of sausage-shaped products that was manufactured as described earlier. After setting the second clip at the upstream end of the sausage-shaped product, the sausage is formed. During this step, the sausage can be bent to form a ring. Both downstream and upstream end of the sausage can be connected by a string to form a ring-shaped sausage.

### REFERENCE SIGNS

- A: closure axis
- B: closure area
- 100: system
- 200: clipping machine
- 210: clipping unit
- 212: receptacle
- 220: clip supply reel
- 222: clip guide
- 300: first guiding means
- 302: table top
- 310a: first guiding surface
- 312: mobile support frame
- 314: wheels
- 316: leg
- 318: bar
- 320: support bars
- 400: second guiding means
- 412: first guide cylinder
- 412a: second guiding surface
- 414: second guide cylinder
- 414a: second guiding surface
- 420: socket
- 430: arc
- 500: third guiding means
- 510a: third guiding surface
- 600: manual trigger button

## Claims

1. A system (100) for manufacturing sausage-shaped products, the system (100) comprising:
a clipping machine (200) with a clipping unit (210) for applying and closing at least one closure means on a plait-like portion between two successive sausage-shaped products of a chain of sausage-shaped products wherein the plait-like portion defines a closure axis (A) at least during the application and closure of the closure means;
first guiding means (300) having a first guiding surface (310a) positioned at least close to the clipping unit (210) and extending at least upstream of the clipping unit (210); and
second guiding means (400) arranged spaced apart to and upstream of the clipping unit (210), the second guiding means (400) having a second guiding surface (412a, 414a) for guiding a sausage-shaped product to be guided to the clipping unit (210) wherein the second guiding surface (412a, 414a) are oriented at least substantially perpendicular to the first guiding surface (310a) of the first guiding means (300);
wherein the second guiding surface (412a, 414a) of the second guiding means (400) are provided at a location on the first guiding surface (310a) of the first guiding means (300) that is offset from the closure axis (A) of the clipping unit (210).

2. The system (100) according to claim 1, wherein the first guiding surface (310a) provided by the first guiding means (300) is several times larger than the second guiding surface (412a, 414a) provided by the second guiding means (400).

3. The system (100) according to claim 1 or 2, wherein the first guiding surface (310a) of the first guiding means (300) is a table top providing an at least substantially flat surface extending preferably horizontally.

4. The system (100) according to claim 3, wherein the first guiding surface (310a) of the first guiding means (300) surrounds at least substantially completely the clipping unit (210).

5. The system (100) according to any one of claims 1 through 4, wherein the second guiding surface (412a, 414a) of the second guiding means (400) is continuously rounded and extends preferably at least substantially perpendicular to the first guiding surface (310a) of the first guiding means (300).

6. The system (100) according to any one of claims 1 through 5, wherein the second guiding means (400) comprise a first guide cylinder (412) provided at least partially with the second guiding surface (412a).

7. The system (100) according to claim 6, wherein the second guiding means (400) comprise a second guide cylinder (414), which extends at least substantially parallel to the first guide cylinder (412) which is provided at least partially with a further second guiding surface (414a).

8. The system (100) according to claim 7, wherein the first and the second guide cylinder (412, 414) define an at least substantially vertically extending plane, which preferably intersects the closure axis (A) at an obtuse angle.

9. The system (100) according to claim 6 and/or claim 7 or 8, wherein the first and/or the second guide cylinder (410, 412) are detachably attached at the first guiding means (300) and are adjustable along the first guiding surface (310a) provided by the first guiding means (300).

10. The system (100) according to any of claims 7 through 9, wherein the first and the second guide cylinders (412, 414) are connected to each other on their free ends, preferably via an arc (430).

11. The system (100) according to claims 1 through 10, further comprising a manual trigger button (600) for triggering the clipping procedure of the clipping machine (200).

12. The system (100) according to claims 1 through 11, further comprising third guiding means (500) having a third guiding surface (510a) and being detachably attached at the first guiding means (300) and extending at least substantially perpendicular to the first guiding means (300).

13. The system according to claim 12, wherein the third guiding means (500) are formed by a material strip, preferably made of stainless steel.

14. The system according to claim 6 through 13, wherein the guiding surfaces (412a, 414a) of the first and/or the second guide cylinder (412, 414) are made from a material having a low friction coefficient.

15. A guiding means for use with a system (100) according to any of claims 1 through 14 which is formed by a guide cylinder (412, 414) detachably attachable to the first guiding means (300) of the system (100) in a position upstream and spaced apart from the clipping unit (210).
